# EUROPÄISCHE PATENTSCHRIFT

(11) **EP 1 516 108 B1**
(45) Veröffentlichungstag und Bekanntmachung des Hinweises auf die Patenterteilung: **07.03.2007**
(21) Anmeldenummer: 03732420.9
(22) Anmeldetag: 20.05.2003
(51) Int. Cl.: F01N 11/00

(54) **VERFAHREN ZUR ÜBERWACHUNG EINER ABGASANLAGE EINES KRAFTFAHRZEUGES**
METHOD FOR MONITORING AN EXHAUST GAS SYSTEM OF A MOTOR VEHICLE
PROCEDE DE SURVEILLANCE DU SYSTEME D'EVACUATION DES GAZ D'ECHAPPEMENT D'UN VEHICULE AUTOMOBILE

(30) Priorität: 27.06.2002 DE 10228659
(43) Veröffentlichungstag der Anmeldung: 23.03.2005
(73) Patentinhaber: DaimlerChrysler AG, 70567 Stuttgart (DE)
(72) Erfinder: BRAUN, Tillmann, 73663 Berglen (DE)
(86) Internationale Anmeldenummer: PCT/EP2003/005271
(87) Internationale Veröffentlichungsnummer: WO 2004/003355

(56) Entgegenhaltungen:
- EP-A- 0 442 648
- EP-A- 0 756 071
- DE-A- 4 227 207
- DE-A- 10 013 893
- US-A- 5 560 200
- US-A- 5 610 844
- US-B1- 6 357 225

## Beschreibung

Die vorliegende Erfindung betrifft ein Verfahren zur Überwachung einer Abgasanlage eines Kraftfahrzeugs mit einer Brennkraftmaschine und mit einer Überwachungselektronik mit den Merkmalen des Anspruchs 1.

Aus der Offenlegungsschrift DE 100 13 893 A1 ist ein Verfahren zur Überwachung einer Abgasanlage eines Kraftfahrzeuges mit einer Brennkraftmaschine bekannt. Beurteilt wird bei diesem Verfahren die katalytische Aktivität eines in einem Abgasleitungsabschnitt angeordneten Katalysators als reinigungswirksames Bauteil. Die katalytische Aktivität wird über die Ermittlung der Anspringtemperatur der Kohlenmonoxidoxidationsreaktion beurteilt. Das Ablaufen der Kohlenmonoxidoxidationsreaktion wird durch entsprechende Sensoren, welche vor und hinter dem Katalysator angeordnet sind erfasst. Zusätzlich wird die Abgastemperatur hinter dem Katalysator gemessen, wozu ein Temperatursensor an der Ausströmseite des zur Aufnahme des Katalysators vorgesehenen Abgasleitungsabschnitts angeordnet ist. Von einer Überwachungselektronik wird die Differenz zwischen der Abgastemperatur hinter dem Katalysator und der Anspringtemperatur ermittelt. Auf der Basis dieses Ergebnisses und der sensorisch erfassten Kohlenmonoxidumsetzung wird die Aktivität des Katalysators beurteilt und auf diese Weise die Abgasanlage überwacht.

Aus der EP 0 442 648 A2 ist ein Verfahren zur Überwachung eines katalytischen Konverters bekannt, bei welchem dessen Abgaseintrittstemperatur und dessen Abgasaustrittstemperatur gemessen wird. Die Temperaturmesswerte werden ausgewertet, indem deren Differenz gebildet wird, welche anschließend einer Integrationsoperation unterworfen wird. Die Integrationsoperation hat eine Glättung des Temperaturverlaufs oder der Werteverläufe zur Folge, wodurch Fehlinterpretationen vermieden werden.

Aus der Patentschrift US 5 560 200 A ist ein Verfahren zur Überwachung eines katalytischen Konverters bekannt, bei welchem die Temperatur der Trägerstruktur des Konverters bzw. die Temperatur der darauf aufgebrachten Beschichtung an mindestens einer Stelle bestimmt wird. Ferner wird die Abgastemperatur stromaufwärts von dieser Stelle bestimmt und eine zeitliche Ableitung der Temperaturen sowie die Differenz der zeitlichen Ableitungen gebildet. Ein Vorzeichenwechsel dieser Differenz wird als das Einsetzen der katalytischen Wirkung des Katalysators interpretiert, wodurch das Anspringen des Katalysators detektiert wird.

Aus der EP 0 756 071 A2 ist eine Vorrichtung zur Bestimmung einer Verschlechterung eines in in einer Abgasanlage angeordneten Katalysators bekannt. Die Vorrichtung umfasst einen Temperatursensor zur Messung der Katalysatortemperatur sowie eine Steuereinheit, die einen Schätzwert für die Katalysatortemperatur liefert. Dabei kann es sich um Temperaturen am stromabwärtigen Ende des Katalysators handeln. Aus dem Verhältnis zwischen gemessener und geschätzter Katalysatortemperatur wird auf den Alterungszustand des Katalysators geschlossen.

Aufgabe der Erfindung ist es demgegenüber, ein Verfahren anzugeben, welches eine allgemeinere Überwachung einer Abgasanlage ermöglicht.

Diese Aufgabe wird erfindungsgemäß durch ein Verfahren mit den Merkmalen des Anspruchs 1 gelöst.

Das erfindungsgemäße Verfahren zeichnet sich dadurch aus, dass von der Überwachungselektronik ein zeitlicher Verlauf der ausströmseitigen Abgastemperatur T2 mit einem zeitlichen Verlauf eine einströmseitigen Abgastemperatur T1 an der Einströmseite eines für die Aufnahme eines reinigungswirksamen Bauteils vorgesehenen Abgasleitungsabschnitts und/oder mit einem zeitlichen Verlauf eines errechneten Wertes T2* für die Abgastemperatur an der Ausströmseite des Abgasleitungsabschnitts verglichen wird, wobei der errechnete Wert T2* anhand der wärmespeichernden und/oder strömungstechnischen Wirkung des reinigungswirksamen Bauteils ermittelt wird und durch den Vergleich oder die Vergleiche ermittelt wird, ob das reinigungswirksame Bauteil im Abgasleitungsabschnitt angeordnet ist oder nicht.

Mit dieser Vorgehensweise wird in vorteilhafter Weise die Erscheinung genutzt, dass ein in einem Abgasleitungsabschnitt eingebautes reinigungswirksames Bauteil die Abgastemperatur und deren zeitlichen Verlauf beeinflusst. Als reinigungswirksames Bauteil kommt hier in erster Linie ein Partikelfilter oder ein Abgaskatalysator in Betracht, von welchem die Abgastemperatur auch ohne das Auftreten von Reaktionswärmetönungen auf Grund seiner wärmespeichernden Wirkung beeinflusst wird. Als reinigungswirksames Bauteil kommt jedoch beispielsweise auch eine schaltbare Kühlschleife oder ein anderweitig, vorzugsweise wärmetechnisch passiv wirkendes Bauteil in Betracht. Treten wärmespeichernden Wirkungen nicht auf, so kann daraus auf das Fehlen des Bauteils geschlossen werden. Werden daher die Verläufe der Temperaturen an der Einströmseite und an der Ausströmseite des Abgasleitungsabschnittes ermittelt und auf geeignete Weise miteinander verglichen, so kann beurteilt werden, ob in diesem Abgasleitungsabschnitt ein reinigungswirksames Bauteil eingebaut ist. Das erfindungsgemäße Verfahren erlaubt es ferner, über einen geeigneten Vergleich der Temperaturverläufe ein diesbezüglich ungewöhnliches Verhalten dahingehend zu deuten, dass in diesem Fall ein falsches Bauteil in dem Abgasleitungsabschnitt angeordnet ist. Desgleichen ermöglicht das erfindungsgemäße Verfahren auch eine Erkennung von Leckagen in dem zwischen Einströmseite und Ausströmseite liegenden Leitungsabschnitt auf Grund der strömungstechnischen Wirkung einer Leckage. Falls bei der Überwachung der Abgasanlage Unregelmäßigkeiten festgestellt werden, kann natürlich auf beliebige Weise, beispielsweise in Form eines Warnsignals, darüber informiert werden.

Der angesprochene Vergleich kann zwischen einem Verlauf der ausströmseitigen Temperatur T2 und einem Verlauf einer einströmseitigen Temperatur T1 durchgeführt werden. Es kann aber auch der Verlauf der ausströmseitigen Temperatur T2 mit einem Verlauf einer ausströmseitig zu erwartenden Temperatur T2* verglichen werden. Letzteres wird vorzugsweise unter Berücksichtigung wärmetechnischer und strömungstechnischer Aspekte sowie unter Berücksichtigung des zu erwartenden Verhaltens des reinigungswirksamen Bauteils und des aktuellen Betriebszustands des Kraftfahrzeuges modellgestützt oder kennfeldgestützt ermittelt. In ähnlicher Weise kann natürlich auch die einströmseitige Temperatur T1 und ihr Verlauf rechnerisch oder kennfeldgestützt ermittelt werden. Die ausströmseitige Temperatur T2 wird dagegen direkt mittels eines geeigneten Messfühlers an der Ausströmseite des Abgasleitungsabschnitts, d.h. innerhalb der Querschnittsfläche, welche den Abgasleitungsabschnitt ausströmseitig begrenzt, gemessen. Vorzugsweise werden die Zeitabschnitte, in welchen der Vergleich der Temperaturverläufe ausgewertet wird, unter Berücksichtigung zusätzlicher Kriterien ausgewählt.

In Ausgestaltung des Verfahrens werden die zeitliche Ableitungen dT1/dt und dT2/dt der einströmseitigen Temperatur T1 und der ausströmseitigen Temperatur T2, und die Differenz dT1/dt - dT2/dt der Ableitungen ermittelt und das Ergebnis bewertet. Durch Bildung der zeitlichen Ableitungen der Temperaturen kann der Verlauf der Temperaturen besonders gut charakterisiert werden. Die Differenzbildung ist hingegen für einen Vergleich besonders gut geeignet.

In weiterer Ausgestaltung des Verfahrens wird von der Überwachungselektronik ein Signal erzeugt, welches auf das Fehlen des reinigungswirksamen Bauteils oder auf das Vorhandensein eines falschen Bauteils hinweist, wenn die Differenz dT1/dt - dT2/dt der Ableitungen innerhalb eines vorgegebenen Wertebereichs liegt. Grundlage für diese Ausgestaltung bildet die Erkenntnis, dass ein reinigungswirksames Bauteil in vielen Betriebssituationen als Wärmesenke oder als Wärmequelle in Erscheinung tritt. Hauptsächlich auf Grund seiner wärmekapazitive Wirkung macht sich die Anwesenheit eines reinigungswirksamen Bauteils durch eine mehr oder weniger große, positive oder negative Differenz dT1/dt - dT2/dt bemerkbar. Ist dies nicht in ausreichendem Maß zu beobachten, d.h. liegt die Differenz dT1/dt - dT2/dt innerhalb eines durch zwei Grenzwerte vorgegebenen, vorzugsweise vergleichsweise kleinen, um Null liegenden, Wertebereichs, so kann daraus geschlossen werden, dass ein reinigungswirksames Bauteil in dem Abgasleitungsabschnitt nicht vorhanden ist. Dies wird dann durch die Erzeugung und Ausgabe eines entsprechenden Signals angezeigt. Analog hierzu kann eine entsprechende Abweichung von dem zu erwartenden Einfluss eines reinigungswirksamen Bauteils auf die Temperaturverläufe auch dahingehend interpretiert werden, dass ein falsches Bauteil eingebaut wurde, weil das richtige Bauteil eine Differenz außerhalb des vorgegebenen Wertebereichs ergeben hätte.

In weiterer Ausgestaltung des Verfahrens wird von der Überwachungselektronik ein Signal erzeugt, welches auf das Fehlen des reinigungswirksamen Bauteils oder auf das Vorhandensein eines falschen Bauteils hinweist, wenn die Differenz dT1/dt - dT2/dt der Ableitungen innerhalb eines vorgegebenen Wertebereichs liegt, und die zeitliche Ableitung dT1/dt der einströmseitigen Temperatur T1 außerhalb eines vorgegebenen Wertebereichs liegt. Durch die Berücksichtigung der Änderungsgeschwindigkeit dT1/dt der Temperatur T1 an der Einströmseite des Abgasleitungsabschnitts bei der Auswertung der Differenz dT1/dt-- dT2/dt wird die Dynamik des eingangsseitigen Temperaturverlaufs mit berücksichtigt. Da sich bei einer großen Dynamik des eingangsseitigen Temperaturverlaufs die wärmespeichernde Wirkung eines Bauteils in dem Abgasleitungsabschnitt besonders stark bemerkbar macht, wird damit auch eine besonders zuverlässige Beurteilung des Abgasleitungsabschnitts ermöglicht und somit die getroffene Aussage besonders zuverlässig. Durch die Berücksichtigung der Änderungsgeschwindigkeit dT1/dt der Temperatur T1 an der Einströmseite des Abgasleitungsabschnitts werden außerdem in vorteilhafter Weise Einflüsse von Wärmetönungen, welche vom reinigungswirksamen Bauteil erzeugt werden können, minimiert.

In weiterer Ausgestaltung des Verfahrens werden von der Überwachungselektronik die zeitlichen Ableitungen dT2/dt und dT2*/dt der ausströmseitigen Abgastemperatur T2 und des errechneten Werts T2*, und die Differenz dT2*/dt - dT2/dt der Ableitungen ermittelt. Es wird demnach die Änderungsgeschwindigkeit der Temperatur T2 an der Ausströmseite des Abgasleitungsabschnitts und die Änderungsgeschwindigkeit der dort zu erwartenden Temperatur T2* ermittelt und auf diese Weise der Verlauf der Temperaturen erfasst. Mittels Differenzbildung wird der Vergleich durchgeführt. Auf diese Weise kann ebenfalls beurteilt werden, ob ein reinigungswirksames Bauteil in dem Abgasleitungsabschnitt vorhanden ist, bzw. ob dort ein falsches Bauteil angeordnet ist.

In weiterer Ausgestaltung des Verfahrens wird von der Überwachungselektronik ein Signal erzeugt, welches auf das Fehlen des reinigungswirksamen Bauteils oder auf das Vorhandensein eines falschen Bauteils hinweist, wenn die Differenz dT2*/dt - dT2/dt der Ableitungen außerhalb eines vorgegebenen Wertebereichs liegt. Dies ist möglich, da bei Anwesenheit eines reinigungswirksamen Bauteils an der Ausströmseite des Abgasleitungsabschnitts eine Temperatur T2 gemessen werden sollte, welche der dort zu erwartenden und rechnerisch ermittelten Temperatur T2* entspricht. Dies bedeutet, dass bei Anwesenheit des zu erwartenden Bauteils für die Differenz dT2*/dt - dT2/dt ein Wert innerhalb eines durch zwei vorgebbare Grenzwerte gegebenen Wertebereichs erwartet werden kann. Ist dies nicht der Fall, so kann davon ausgegangen werden, dass in dem Abgasleitungsabschnitt das dort vorgesehene Bauteil nicht vorhanden ist.

In weiterer Ausgestaltung des Verfahrens wird von der Überwachungselektronik die zeitliche Ableitung dT1/dt der einströmseitigen Abgastemperatur T1 ermittelt, und ein Signal erzeugt, welches auf das Fehlen des reinigungswirksamen Bauteils oder auf das Vorhandensein eines falschen Bauteils hinweist, wenn die Differenz dT2*/dt - dT2/dt der Ableitungen außerhalb eines vorgegebenen Wertebereichs liegt und die zeitliche Ableitung dT1/dt der einströmseitigen Temperatur außerhalb eines vorgebbaren Wertebereichs liegt. Die zusätzliche Einbeziehung der Änderungsgeschwindigkeit dT1/dt der einströmseitigen Temperatur T1 des Abgasleitungsabschnitts in den Vergleich hat den Vorteil, die Zuverlässigkeit der getroffenen Entscheidung zu verbessern.

Im Folgenden wird die Erfindung anhand von Zeichnungen und zugehörigen Beispielen näher erläutert. Dabei zeigen:
- Fig. 1: ein schematisches Blockbild einer Brennkraftmaschine mit einem in einer Abgasleitung angeordneten Katalysator als reinigungswirksames Bauteil,
- Fig. 2: ein Diagramm mit den zeitlichen Verläufen der vor und hinter einem Katalysator gemessenen Temperaturen T1 und T2 bei einem typischen Brennkraftmaschinenbetrieb,
- Fig. 3: ein Diagramm mit den zeitlichen Verläufen der vor und hinter einem Katalysator gemessenen Temperaturen T1 und T2 bei einem Brennkraftmaschinenbetrieb mit einem Lastwechsel von niedriger Last zu höherer Last,
- Fig. 4: ein Diagramm mit den zeitlichen Verläufen der zeitlichen Ableitungen dT1/dt und dT2/dt der vor und hinter einem Katalysator gemessenen Temperaturen T1 und T2 bei einem Brennkraftmaschinenbetrieb mit einem Lastwechsel von niedriger Last zu höherer Last,
- Fig. 5: ein Diagramm mit dem zeitlichen Verläufen der Differenz dT1/dt - dT2/dt der zeitlichen Ableitungen dT1/dt und dT2/dt der vor und hinter einem Katalysator gemessenen Temperaturen T1 und T2 bei einem Brennkraftmaschinenbetrieb mit einem Lastwechsel von niedriger Last zu höherer Last,
- Fig. 6: ein Diagramm mit den zeitlichen Verläufen der vor und hinter einem Katalysator gemessenen Temperaturen T1 und T2 bei einem Brennkraftmaschinenbetrieb mit einem Lastwechsel von höherer Last zu niedriger Last,
- Fig. 7: ein Diagramm mit den zeitlichen Verläufen der zeitlichen Ableitungen dT1/dt und dT2/dt der vor und hinter einem Katalysator gemessenen Temperaturen T1 und T2 bei einem Brennkraftmaschinenbetrieb mit einem Lastwechsel von höherer Last zu niedriger Last,
- Fig. 8: ein Diagramm mit dem zeitlichen Verläufen der Differenz dT1/dt - dT2/dt der zeitlichen Ableitungen dT1/dt und dT2/dt der vor und hinter einem Katalysator gemessenen Temperaturen T1 und T2 bei einem Brennkraftmaschinenbetrieb mit einem Lastwechsel von höherer Last zu niedriger Last,

- Fig. 9: ein Ablaufdiagramm für eine bevorzugte Vorgehensweise bei der Durchführung des erfindungsgemäßen Verfahrens,
- Fig. 10: ein weiteres Ablaufdiagramm für eine weitere bevorzugte Vorgehensweise bei der Durchführung des erfindungsgemäßen Verfahrens.

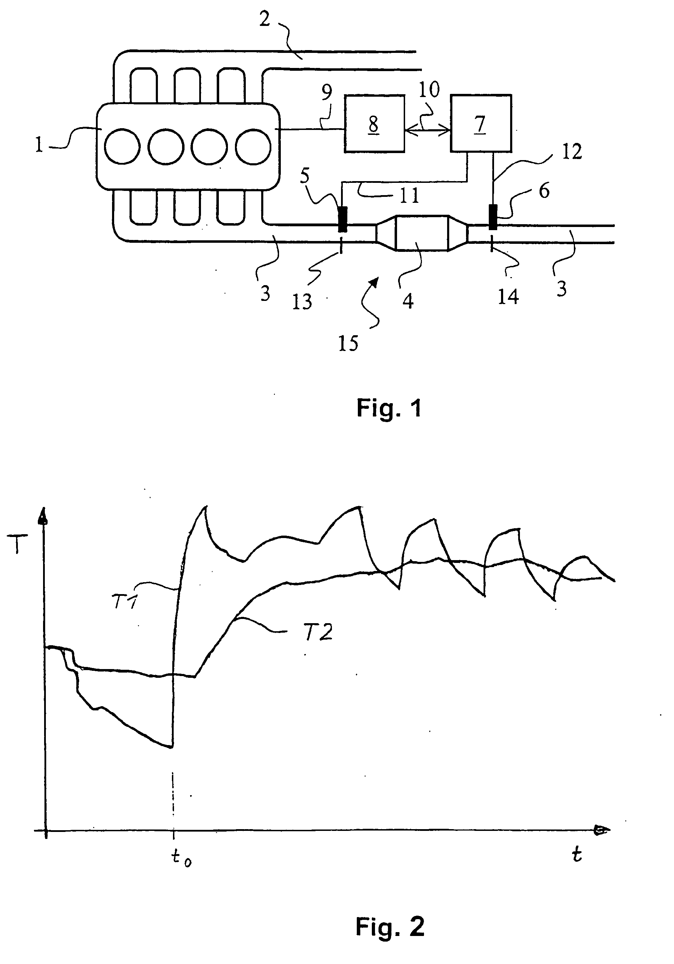

Gemäß Fig. 1 wird einer hier beispielhaft vierzylindrig ausgeführten Brennkraftmaschine 1 Verbrennungsluft über eine Ansaugluftleitung 2 zugeführt. Das im Verbrennungsprozess erzeugte Abgas wird über eine Abgasleitung 3 einem reinigungswirksamen Bauteil 4 zugeführt. Das reinigungswirksame Bauteil 4 ist als Abgaskatalysator ausgeführt und in einem Abgasleitungsabschnitt 15 der Abgasleitung 3 angeordnet. Der Abgasleitungsabschnitt 15 weist eine mit 13 bezeichnete Einströmseite und eine mit 14 bezeichnete Ausströmseite auf. Im Querschnittsbereich der Einströmseite 13 ist ein Temperaturfühler 5 angeordnet. Im Querschnittsbereich der Ausströmseite 14 ist ein weiterer Temperaturfühler 6 angeordnet. Der, beispielsweise als Dieselmotor ausgeführten, Brennkraftmaschine 1 ist eine elektronische Steuer-/Regeleinrichtung 8 zugeordnet, welche den gesamten Motorbetrieb steuert bzw. regelt. Die Steuer-/Regeleinrichtung 8 verfügt über die üblichen Möglichkeiten moderner Motorsteuergeräte und weist hierfür insbesondere eine Recheneinheit, eine Speichereinheit und Ein-/Ausgabeeinheiten auf. Zur Realisierung der Steuer-/Regelfunktionen erhält die Steuer-/Regeleinrichtung 8 eine Vielzahl von Signalen über entsprechende Signalleitungen. Von diesen sind in der Fig. 1 nur die Signalleitungen 9 und 10 eingezeichnet. Von der Signalleitung 9 erhält die Steuer-/Regeleinrichtung 8 Informationen über den Betriebszustand des Motors 1, insbesondere Informationen über die Motordrehzahl und die Motorlast. Die Steuer-/Regeleinrichtung 8 steht über die bidirektionale Datenleitung 10 mit einer Überwachungselektronik 7 in Verbindung. Die Überwachungselektronik verfügt ebenfalls über eine Recheneinheit, mit welcher die über die Signalleitungen 11 und 12 übertragenen Messwerte der Temperaturfühler 5, 6 ausgewertet werden. Weitere zum Betrieb der Brennkraftmaschine 1 und der gesamten Abgasanlage eingesetzte Bauteile wie Kraftstoffzufuhrleitungen, Lambdasonden in der Abgasleitung 3 und dergl. sind aus Gründen der Übersichtlichkeit nicht in die Fig. 1 mit aufgenommen. In der Abgasleitung 3 können.natürlich zusätzlich zum Katalysator 4 hier ebenfalls nicht dargestellte, weitere Komponenten zur Abgasreinigung angeordnet sein. Ferner kann selbstverständlich die Überwachungselektronik 7 mit der Steuer-/Regeleinrichtung 8 zu einer integrierten Baueinheit zusammengefasst sein.

In einer ersten Ausführungsform des erfindungsgemäßen Verfahren ermittelt die Überwachungselektronik 7 die Verläufe der von den Temperaturfühlern 5 und 6 erfassten, bezüglich des Abgasleitungsabschnitts 15 einströmseitigen und ausströmseitigen Abgastemperaturen T1 und T2.

Im Diagramm der Fig. 2 sind die Verhältnisse bei einem typischen Motorbetrieb verdeutlicht. Eingezeichnet sind die Verläufe der Temperaturen T1 und T2 während eines etwa 30-minütigen Zeitintervalls. Zum Zeitpunkt t₀ ändert sich der Motorbetrieb sprunghaft von einem niedrigen Lastpunkt zu einem höheren Lastpunkt. Als Folge hiervon steigt gleichzeitig die Temperatur des vom Motor 1 abgegebenen Abgases sprunghaft an. Es wird daher unmittelbar nach dem Lastwechsel das Auftreten eines sehr steilen Anstiegs der Temperatur T1 an der Einströmseite 13 des Abgasleitungsabschnitts 15, in welchem der Katalysator 4 angeordnet ist, festgestellt. Im Gegensatz hierzu wird an der Ausströmseite 14 ein vergleichsweise gedämpfter, geringerer Anstieg der Temperatur T2 festgestellt, welcher außerdem mit deutlicher Verzögerung auftritt. Im weiteren Verlauf treten weitere, weniger starke Lastwechsel während des Motorbetriebs auf. Diese machen sich ebenfalls durch spontane Änderungen der Temperatur T1 bemerkbar, während die Änderungen der Temperatur T2 demgegenüber gering sind.

Aus dem dargestellten Verhalten der Temperaturen T1 und T2 wird ersichtlich, dass mittels eines Vergleichs der Verläufe der Temperaturen T1 und T2 beurteilt bzw. festgestellt werden kann, ob in dem Abgasleitungsabschnitt 15 ein reinigungswirksames Bauteil vorhanden ist. Dieses beeinflusst, hauptsächlich auf Grund seiner Wärmekapazität, die Temperatur des Abgases, so dass an der Ausströmseite 14 des Abgasleitungsabschnitts 15 ein anderer Temperaturverlauf auftritt, als an der Einströmseite 13. Ist dagegen im Abgasleitungsabschnitt kein reinigungswirksames Bauteil vorhanden, so sind die Verläufe der Temperaturen T1 und T2 nahezu identisch. Es ist klar, dass die Art des im Abgasleitungsabschnitt 15 angeordneten Bauteils den Verlauf der Temperatur T2 ebenfalls beeinflusst. Durch einen geeigneten Vergleich der Verläufe der Temperaturen T1 und T2 kann daher der Abgasleitungsabschnitt auch hinsichtlich der Art des zwischen Einströmseite 13 und Ausströmseite 14 angeordneten Bauteils beurteilt werden. Im Folgenden wird die erfindungsgemäße Vorgehensweise bei dem Vergleich der Temperaturverläufe näher erläutert.

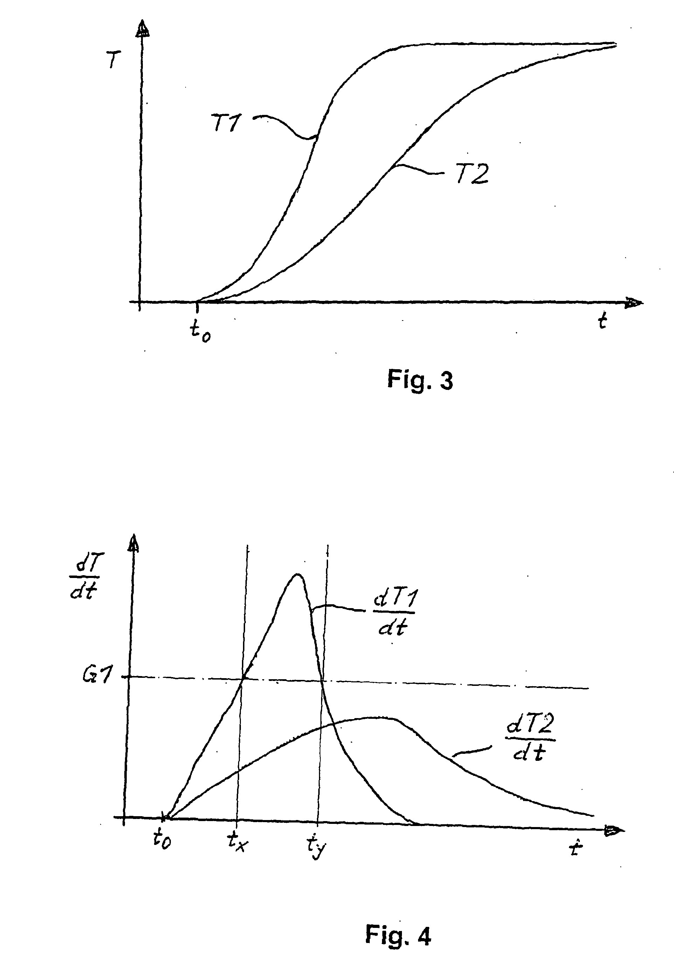

Im Diagramm der Fig. 3 ist zu diesem Zweck der Verlauf der Temperaturen T1 und T2 bei einem Lastwechsel des Motors 1 von niedriger Last zu höherer Last eingezeichnet. Vor und nach dem Lastwechsel sind jeweils stationäre Verhältnisse gegeben. Wie dem Diagramm entnommen werden kann, steigt die Temperatur T1 nach dem beim Zeitpunkt t₀ vorgenommenen Lastwechsel steil an, während die Temperatur T2 im Vergleich hierzu deutlich weniger steil ansteigt. In einem breiten Zeitintervall bleibt deshalb die Temperatur T2 deutlich hinter der Temperatur T1 zurück. Erfindungsgemäß werden die Verläufe der Temperaturen T1 und T2 miteinander verglichen, indem die zeitlichen Ableitungen dT1/dt und dT2/dt und die Differenz dT1/dt - dT2/dt der Ableitungen gebildet werden, was durch Ausführung der entsprechenden Rechenoperationen in der Überwachungselektronik 7 geleistet werden kann.

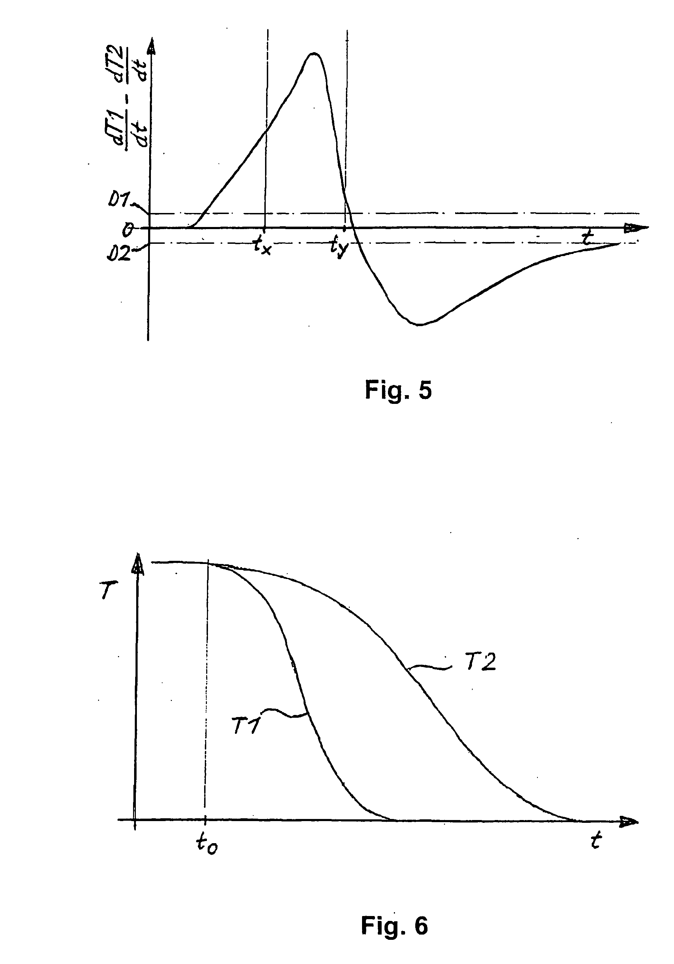

Die Diagramme der Fig. 4 und der Fig. 5 zeigen die sich ergebenden Verhältnisse. Das Diagramm der Fig. 4 zeigt die Verläufe der zeitlichen Ableitungen dT1/dt und dT2/dt der vor und hinter dem Katalysator 4 gemessenen Temperaturen T1 und T2 bei einem Motorlastwechsel, welcher die diskutierten Temperaturverläufe der Fig. 3 zur Folge hat. Durch die Bildung der zeitlichen Ableitungen treten die Unterschiede im Verlauf der Temperaturen T1 und T2 noch deutlicher in Erscheinung, als im Diagramm der Fig. 3 dargestellt.

Insbesondere durch die im Diagramm der Fig. 5 dargestellten Differenz dT1/dt - dT2/dt der zeitlichen Ableitungen dT1/dt und dT2/dt werden die Unterschiede ersichtlich. Da kurz nach dem Lastwechsel die Temperatur T1 rasch ansteigt, die Temperatur T2 dagegen nur vergleichsweise langsam, tritt in diesem Zeitbereich ein mehr oder weniger hoher positiver Wert für die Differenz dT1/dt - dT2/dt auf (vergl. Fig. 5). Da die Temperatur T1 jedoch auch vergleichsweise rasch einem Beharrungswert entgegenstrebt, bzw. diesen erreicht, während die Temperatur T2 noch weiter ansteigt, durchläuft die Differenz dT1/dt - dT2/dt ein ausgeprägtes Maximum. Anschließend wechselt der Wert für die Differenz dT1/dt - dT2/dt das Vorzeichen und wird negativ. Im negativen Wertebereich wird ein Minimum durchschritten und mit der Annäherung an stationärer Temperaturverhältnisse nähert sich auch die Differenz dT1/dt - dT2/dt ausgehend von negativen Werten der Nulllinie an. Als Folge der Anwesenheit des Katalysators 4 werden demnach, insbesondere bei einem Lastwechsel, meist vergleichsweise große Werte für den Betrag der Differenz dT1/dt - dT2/dt erhalten. Dieser Effekt beruht hauptsächlich auf der wärmespeichernden Wirkung des Katalysators 4, wogegen Wärmetönungen auf Grund von katalytischen Reaktionen im Katalysator 4, insbesondere bei einem Lastsprung, eine geringe Auswirkung haben. Umgekehrt treten kleine Beträge für Differenz dT1/dt - dT2/dt insbesondere dann auf, wenn sich kein Bauteil in dem zu beurteilenden Leitungsabschnitt 12 befindet. Es kann daher ein Wertebereich für die Differenz dT1/dt - dT2/dt vorgegeben werden, innerhalb dessen ein Signal erzeugt wird, welches auf das Fehlen eines reinigungswirksamen Bauteils im Leitungsabschnitt 12 hinweist. Die einen solchen Wertebereich begrenzenden Grenzwerte D1 und D2 sind im Diagramm der Fig. 5 eingezeichnet.

Vorzugsweise wird das Signal für ein fehlendes Bauteil nur dann erzeugt, wenn die Differenz dT1/dt - dT2/dt innerhalb des durch die Grenzwerte D1 und D2 vorgegebenen Wertebereichs liegt und gleichzeitig bestimmte Bedingungen, wie z.B. bestimmte Motorbetriebsbedingungen, vorliegen. Beispielsweise kann die Ausgabe eines Signals für das Fehlen eines reinigungswirksamen Bauteils unterdrückt werden, wenn eine vorbestimmbare Zeit stationäre Motorbetriebsbedingungen vorliegen, oder es kann die Höhe eines Lastwechsels mitberücksichtigt werden. Vorteilhaft ist ferner die Berücksichtigung des Abgasmassenstroms bei der Vorgabe der Grenzwerte D1 und D2.

Besonders bevorzugt wird zusätzlich der Verlauf der Temperatur T1 bzw. die zeitliche Ableitung dT1/dt mitberücksichtigt. Hierzu wird ein Wertebereich für die zeitliche Ableitung dT1/dt der Temperatur T1 an der Einströmseite 13 des Abgasleitungsabschnitts 15 vorgegeben. Dieser Wertebereich für die zeitliche Ableitung dT1/dt für die Temperatur T1 wird ebenfalls durch einen variabel vorgegebenen oberen Grenzwert und durch einen variabel vorgegebenen unteren Grenzwert definiert. Im Diagramm der Fig. 4 ist ein hier mit G1 bezeichneter oberer Grenzwert eingetragen. Der zugeordnete untere Grenzwert ist vorzugsweise negativ und deshalb nicht im Diagramm der Fig. 4 eingezeichnet. Mit den in den Diagrammen der Fig. 4 und 5 eingetragenen Grenzwerten G1, D1, D2 wird daher im Zeitbereich zwischen tₓ und t_{y} (vergl. Fig. 4 und 5) in diesem Fall das Kriterium erfüllt, welches für die Erzeugung und Ausgabe eines Fehlersignals "fehlendes reinigungswirksames Bauteil" maßgebend ist. Dadurch, dass zusätzlich die Änderungsgeschwindigkeit dT1/dt der Abgastemperatur T1 vor dem Katalysator 4 berücksichtigt wird, kann eine Fehldiagnose auf Grund von Reaktionswärmeeinflüssen vermieden werden, da die Freisetzung von Reaktionswärme im Katalysator 4 keine Auswirkung auf die einströmseitige Temperatur T1 hat.

In Analogie zu Fig. 3 zeigt das Diagramm der Fig. 6 den Verlauf der Temperaturen T1 und T2 bei einem Lastwechsel des Motors 1 von höherer Last zu niedriger Last. Vor und nach dem Lastwechsel sind jeweils stationäre Verhältnisse gegeben. Wie dem Diagramm entnommen werden kann, fällt die Temperatur T1 nach dem beim Zeitpunkt t₀ vorgenommenen Lastwechsel steil ab, weil als Folge der geringeren Motorlast vom Motor 1 ein Abgas mit geringerer Temperatur abgegeben wird. Die Temperatur T2 fällt im Vergleich hierzu deutlich weniger steil ab. Die Ursache für dieses Verhalten liegt hauptsächlich im Wärmespeichervermögen des Katalysators 4. Der auf eine vergleichsweise hohe Temperatur aufgeheizte Katalysator 4 gibt die gespeicherte Wärme an das ihn durchströmende, nunmehr kältere Abgas langsam ab. In einem breiten Zeitintervall ist deshalb die Temperatur T2 deutlich höher als die Temperatur T1. Erfindungsgemäß werden die Verläufe der Temperaturen T1 und T2 miteinander verglichen, indem die zeitlichen Ableitungen dT1/dt und dT2/dt und die Differenz dT1/dt - dT2/dt gebildet werden, was durch Ausführung der entsprechenden Rechenoperationen in der Überwachungselektronik 7 geleistet werden kann.

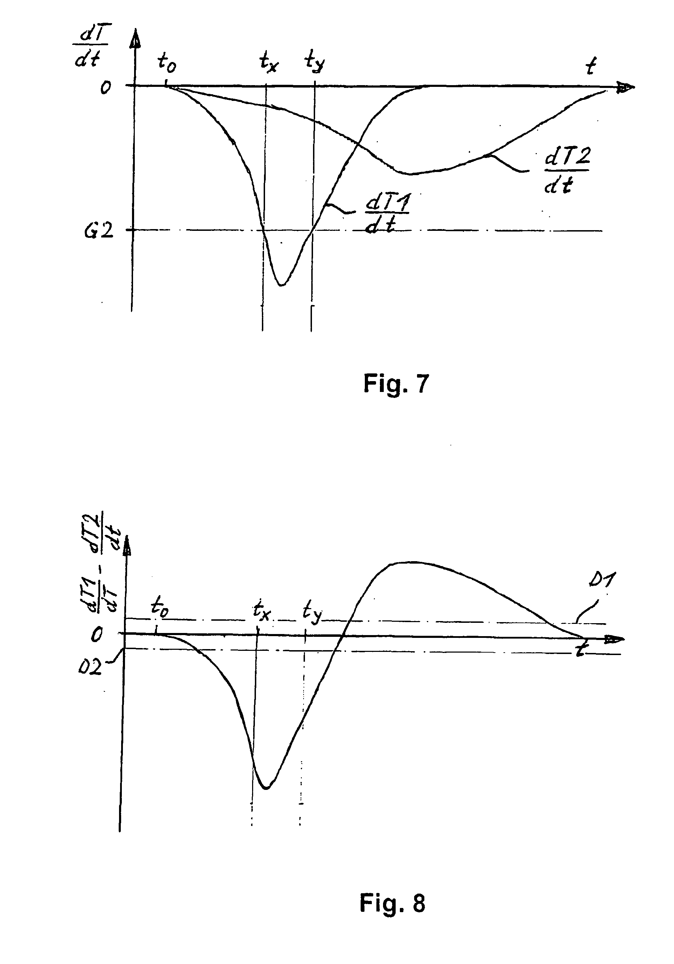

Die Diagramme der Fig. 7 und der Fig. 8 zeigen die sich ergebenden Verhältnisse. Das Diagramm der Fig. 7 zeigt die Verläufe der zeitlichen Ableitungen dT1/dt und dT2/dt der vor und hinter dem Katalysator 4 gemessenen Temperaturen T1 und T2 bei einem Motorlastwechsel, welcher die diskutierten Temperaturverläufe in Fig. 6 zur Folge hat. Durch die Bildung der zeitlichen Ableitungen treten die Unterschiede im Verlauf der Temperaturen T1 und T2 noch deutlicher in Erscheinung, als im Diagramm der Fig. 6 dargestellt. Insbesondere durch die im Diagramm der Fig. 8 dargestellten Differenz dT1/dt - dT2/dt der zeitlichen Ableitungen dT1/dt und dT2/dt werden die Unterschiede ersichtlich. Da kurz nach dem Lastwechsel die Temperatur T1 rasch absinkt, die Temperatur T2 dagegen nur vergleichsweise langsam, tritt in diesem Zeitbereich ein mehr oder weniger großer negativer Wert für die Differenz dT1/dt - dT2/dt auf (vergl. Fig. 8). Da die Temperatur T1 jedoch auch vergleichsweise rasch einem Beharrungswert entgegenstrebt, bzw. diesen erreicht, während die Temperatur T2 noch weiter absinkt, durchläuft die Differenz dT1/dt - dT2/dt ein ausgeprägtes Minimum. Anschließend wechselt der Wert für die Differenz dT1/dt - dT2/dt das Vorzeichen und wird positiv: Im positiven Wertebereich wird ein Maximum durchschritten und mit der Annäherung an stationäre Temperaturverhältnisse nähert sich auch die Differenz dT1/dt - dT2/dt ausgehend von positiven Werten der Nulllinie an. Als Folge der Anwesenheit des Katalysators 4 werden demnach, insbesondere bei einem Lastwechsel, meist vergleichsweise große Werte für den Betrag der Differenz dT1/dt - dT2/dt erhalten. Umgekehrt treten kleine Beträge für Differenz dT1/dt - dT2/dt insbesondere dann auf, wenn sich kein Bauteil in dem zu beurteilenden Leitungsabschnitt 15 befindet. Es kann daher ein Wertebereich für die Differenz dT1/dt - dT2/dt vorgegeben werden, innerhalb dessen ein Signal erzeugt wird, welches auf das Fehlen eines reinigungswirksamen Bauteils im Leitungsabschnitt 15 hinweist. Ein durch die vorgebbaren Grenzwerte D1 und D2 definierter Wertebereich ist im Diagramm der Fig. 8 eingezeichnet.

In Analogie zu den oben beschriebenen Verhältnissen bei einem Lastwechsel von niedriger Last zu höherer Last können auch im umgekehrten Fall zusätzlich bestimmte Motorbetriebsparameter für die Ausgabe eines Signals, welches das Fehlen eines reinigungswirksamen Bauteils anzeigt, berücksichtigt werden. Die Grenzwerte G1, D1, D2 können auch in Abhängigkeit von den Motorbetriebsbedingungen oder in Abhängigkeit vom Abgasmassenstrom vorgegeben werden.

Besonders bevorzugt wird zusätzlich der Verlauf der Temperatur T1 bzw. die zeitliche Ableitung dT1/dt mit berücksichtigt. Hierzu wird ein Wertebereich für die zeitliche Ableitung dT1/dt für die Temperatur T1 an der Einströmseite 13 des Abgasleitungsabschnitts 15 vorgegeben. Der den Wertebereich für die zeitliche Ableitung dT1/dt der Temperatur T1 begrenzende untere Grenzwert G2 ist im Diagramm der Fig. 7 eingetragen. Mit den in den Diagrammen der Fig. 7 und 8 eingetragenen Grenzwerten G1, D1, D2 wird daher im Zeitbereich zwischen tₓ und t_{y} (vergl. Fig. 7 und 8) ebenfalls das Kriterium erfüllt, welches für die Erzeugung und Ausgabe eines Fehlersignals "fehlendes reinigungswirksames Bauteil" maßgebend ist.

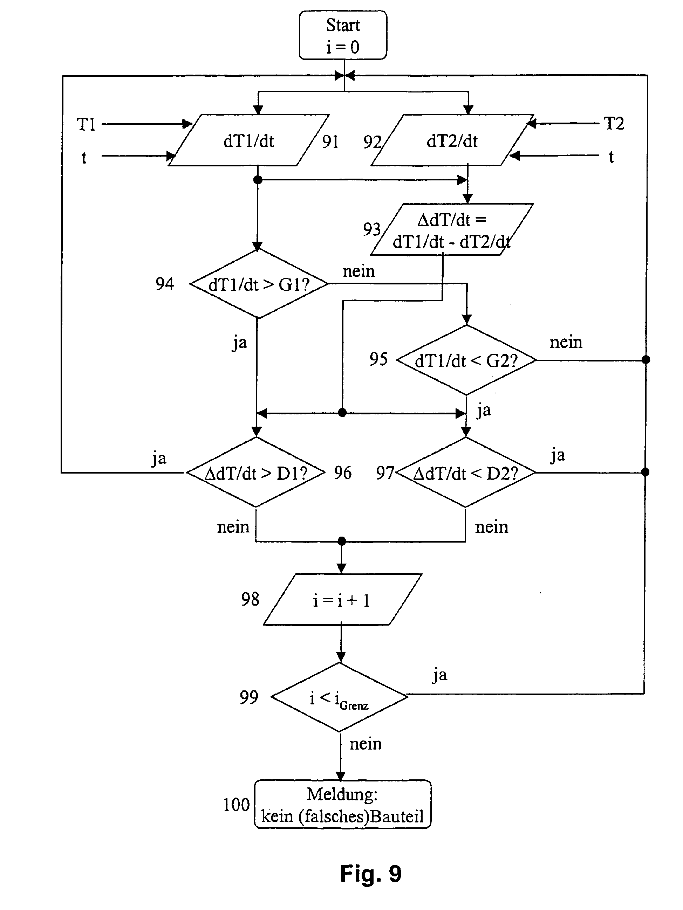

Der Verfahrensablauf für die geschilderte bevorzugte Vorgehensweise ist im Ablaufdiagramm der Fig. 9 wiedergegeben. Gemäß diesem Ablaufdiagramm wird das Verfahren durch Setzen eines Zählers i auf den Anfangswert Null gestartet. Im nächsten Verfahrensschritt 91 bzw. 92 werden von der Überwachungselektronik 7 in einem Zeitintervall mit wählbarer Dauer die Temperaturen T1 und T2 sowie die aktuelle Systemzeit t eingelesen und die Werte für die zeitlichen Ableitungen dT1/dt und dT2/dt ermittelt. Aus diesen Werten wird im Block 93 die Differenz ΔdT/dt = dT1/dt - dT2/dt ermittelt. Im Block 94 wird abgefragt, ob die Änderungsgeschwindigkeit dT1/dt der Temperatur T1 im Einströmbereich 13 des Leitungsabschnitts 15 den vorgebbaren Grenzwert G1 überschreitet, d.h. ob ein entsprechend steiler Temperaturanstieg vorhanden ist. Ist dies der Fall, so wird im Block 96 abgefragt, ob die Differenz ΔdT/dt den vorgebbaren Grenzwert D1 überschreitet. Ist dies ebenfalls der Fall, so wird kein Fehler erkannt und es wird zum Anfang zurückgegangen.

Ergibt die Abfrage des Blocks 94, dass die Änderungsgeschwindigkeit dT1/dt der Temperatur T1 den vorgebbaren Grenzwert G1 nicht überschreitet, so wird weiter im Block 95 abgefragt, ob sie den vorgebbaren Grenzwert G2 unterschreitet. Wird dies ebenso wie beim Block 94 mit "nein" beantwortet, so liegen zumindest annähernd stationäre Verhältnisse vor. Eine Beurteilung des Abgasleitungsabschnitts 15 hinsichtlich der Anwesenheit eines reinigungswirksamen Bauteils wird dann nicht vorgenommen und es wird an den Anfang der Routine zurückgesprungen. Ergibt die Abfrage im Block 95, dass die Änderungsgeschwindigkeit dT1/dt der Temperatur T1 den Grenzwert G2 unterschreitet, so wird weiter im Block 97 abgefragt, ob die Differenz ΔdT/dt den vorgebbaren Grenzwert D2 unterschreitet. Ist dies ebenfalls der Fall, so wird kein Fehler erkannt und es wird zum Anfang zurückgegangen.

Werden die Abfragen im Block 96 bzw. im Block 97 mit "nein" beantwortet, so liegt eine Anomalie vor, da eine Differenz zu erwarten war, welche außerhalb des durch D1 und D2 begrenzten Wertebereichs liegt. Um einen Zufallseinfluss auszuschalten, wird der Zähler i inkrementiert (Block 98) und abgefragt, ob ein Grenzwert i_{Grenz} bereits erreicht wurde (Block 99), d.h. ob das auf die Anomalie hindeutende Ergebnis hinreichend oft aufgetreten ist. Ist dies der Fall, so wird das Ende der Routine mit dem Block 100 erreicht, und die Fehlermeldung "fehlendes reinigungswirksames Bauteil" oder "falsches Bauteil" wird ausgegeben.

Es versteht sich, dass die Temperatur T1 nicht notwendigerweise durch Messung ermittelt werden muss. Vielmehr kann der an der Einströmseite 13 des zu beurteilenden Abgasleitungsabschnitts 15 vorhandene Temperaturwert bzw. Temperaturverlauf durch Modellbildung oder auf der Basis von Kennfeldern für den Motorbetrieb oder auf andere Weise rechnerisch ermittelt werden. Es versteht sich ferner, dass auch bei einer solchen Vorgehensweise beurteilt werden kann, ob ein artfremdes Bauteil im Abgasleitungsabschnitt 15 angeordnet ist. Dies ist dann der Fall, wenn bei instationären Motorbetriebsbedingungen das Bauteil als größere oder kleinere Wärmequelle oder Wärmesenke in Erscheinung tritt, als das im Leitungsabschnitt 15 vorgesehene Bauteil. Um eine diesbezüglich ausreichende Beurteilungszuverlässigkeit zu erzielen, können beispielsweise die Grenzwerte D1, D2, G1, G2 angepasst werden. Beispielsweise kann der durch die Grenzwerte G1, G2 bestimmte Bereich vergrößert werden.

In einer zweiten Ausführungsform des erfindungsgemäßen Verfahrens wird von der Überwachungselektronik 7 ein errechneter Wert T2* für die Temperatur an der Ausströmseite 14 des zu beurteilenden Abgasleitungsabschnitts 15 zur Verfügung gestellt. In Abhängigkeit von den Betriebsbedingungen des Motors ergibt sich somit ein rechnerisch ermittelter Verlauf für die Temperatur T2*, welcher mit dem Verlauf der an der Ausströmseite des Abgasleitungsabschnitts 12 gemessenen Temperatur T2 verglichen wird. Analog zur ersten Ausführungsform des erfindungsgemäßen Verfahrens werden auch hier die zeitlichen Ableitungen der Temperaturen und die Differenz der erhaltenen Werte gebildet. Der ermittelte Wert dT2*/dt - dT2/dT wird nun auf Plausibilität geprüft. Die Prüfung kann auch hier an das Vorhandensein motorischer, strömungstechnischer oder wärme-speichernder Kriterien geknüpft werden. Die Plausibilität ist in diesem Fall dann gegeben, wenn die Differenz dT2*/dt - dT2/dT innerhalb eines durch wahlfrei vorgegebene Grenzwerte D1 und D2 bestimmten Wertebereichs liegt. In diesem Fall wird das normale Verhalten des vorgesehenen Bauteils festgestellt.

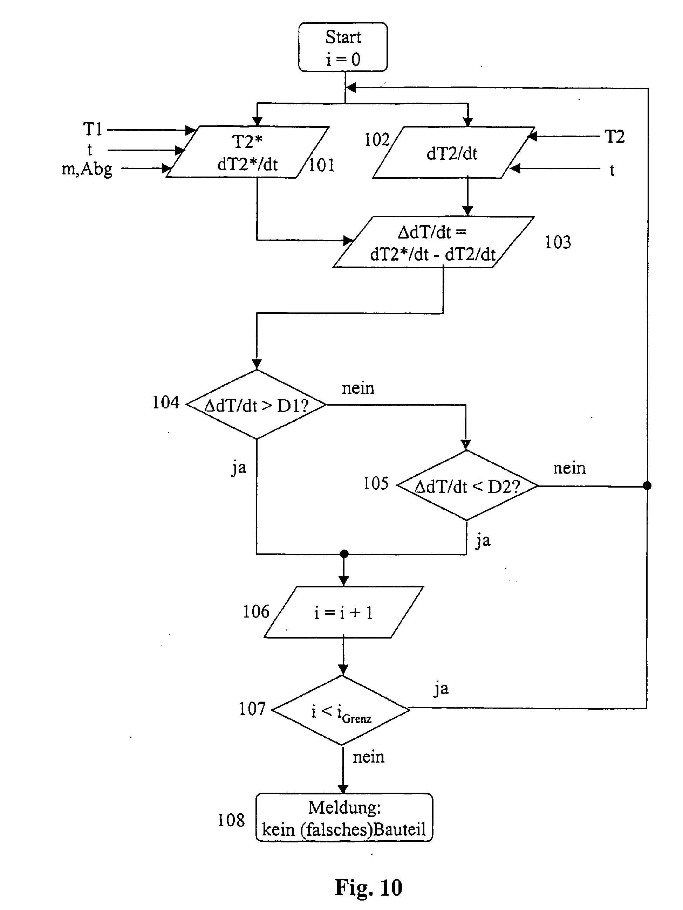

Eine vorteilhafte Vorgehensweise wird durch das Ablaufdiagramm der Fig. 10 wiedergegeben. Im Block 101 werden nunmehr unter Verwendung verschiedener Eingangsdaten wie T1 (einströmseitige Temperatur), t (Systemzeit), m_{Abg} (Abgasmassenstrom) ein zu erwartender Wert T2* für die ausströmseitige Temperatur T2 sowie dessen zeitliche Ableitung dT2*/dt ermittelt. Im Block 102 wird auf der Basis des vom Messfühler 6 gelieferten Messwertes und der Systemzeit t die Änderungsgeschwindigkeit dT2/dt der Temperatur T2 ermittelt. Im Block 103 wird die Differenz ΔdT/dt = dT2*/dt - dT2/dt aus diesen Werten ermittelt. In den Blöcken 104 bzw. 105 wird abgefragt, ob diese Differenz oberhalb eines oberen Grenzwertes D1, bzw. unterhalb eines unteren Grenzwertes D2 liegt. Ist dies in beiden Fällen nicht gegeben, so wird der Abgasleitungsabschnitt 15 als ordnungsgemäß befunden, da keine Abweichung vom erwartungsgemäßen, normalen Verhalten vorhanden ist. Daher wird in diesem Fall zum Anfang der Routine zurückgesprungen. Wird jedoch eine der Abfragen mit "ja" beantwortet, so wird eine Anomalie erkannt, da der Verlauf der Temperatur T2 in vergleichsweise großem Maß vom zu erwartenden, rechnerischen Verlauf abweicht. In diesem Fall wird der Zähler i im Block 106 inkrementiert und danach abgefragt, ob ein Grenzwert i_{Grenz} bereits erreicht wurde (Block 107), d.h. ob das auf die Anomalie hindeutende Ergebnis hinreichend oft aufgetreten ist. Ist dies der Fall, so wird das Ende der Routine mit dem Block 108 erreicht, und die Fehlermeldung "fehlendes oder falsches Bauteil" wird ausgegeben.

Besonders vorteilhaft ist die zusätzliche Berücksichtigung eines bestimmten Wertebereichs für die Änderungsgeschwindigkeit dT1/dt der Temperatur T1. Das Fehlen eines reinigungswirksamen Bauteils oder die Anwesenheit eines falschen Bauteils wird dann erkannt, wenn der Wert für dT1/dt außerhalb eines mittels wahlfrei vorgegebenen Grenzwerten festlegbaren Wertebereichs liegt und gleichzeitig die Differenz dT2*/dt - dT2/dT ebenfalls außerhalb eines durch wahlfrei vorgebbare Grenzwerte festlegbaren Wertebereichs liegt. Es wird also zusätzlich abgefragt und berücksichtigt, ob eine hinreichend steile Temperaturänderung an der Einströmseite 13 des zu beurteilenden Abgasleitungsabschnitts 15 vorliegt. Werden diese Grenzwerte wieder mit G1, G2 und D1, D2 bezeichnet, so kann in Analogie zu der im Ablaufdiagramm der Fig. 9 im Sinne des Ablaufdiagramms der Fig. 10 vorgegangen werden.

Es versteht sich, dass die beschriebenen Vorgehensweise auch zur Überwachung mehrerer Abgasleitungsabschnitte der gesamten Abgasanlage angewendet werden kann. Die Abgasleitungsabschnitte können parallel oder seriell angeordnet sein. Im Fall einer seriellen Anordnung kann der Temperaturverlauf an der Ausströmseite eines Leitungsabschnitts auch als Temperaturverlauf an der Einströmseite des nachfolgenden Leitungsabschnitts betrachtet werden.

## Patentansprüche

1. Verfahren zur Überwachung einer Abgasanlage eines Kraftfahrzeugs mit einer Brennkraftmaschine (1) und mit einer Überwachungselektronik (7), wobei an der Ausströmseite (14) eines für die Aufnahme eines reinigungswirksamen Bauteils (4) vorgesehenen Abgasleitungsabschnitts (15) ein Temperatursensor (6) zur Messung einer ausströmseitigen Abgastemperatur (T2) angeordnet ist, wobei von der Überwachungselektronik (7) ein zeitlicher Verlauf der ausströmseitigen Abgastemperatur (T2) mit einem zeitlichen Verlauf einer einströmseitigen Abgastemperatur (T1) an der Einströmseite (13) des Abgasleitungsabschnitts (15) verglichen wird, wobei
zusätzlich oder alternativ der zeitliche Verlauf der ausströmseitigen Abgastemperatur(T2) mit einem zeitlichen Verlauf eines errechneten Werts (T2*) für die Abgastemperatur an der Ausströmseite (14) des Abgasleitungsabschnitts (15) verglichen wird, wobei der errechnete Wert (T2*) anhand der wärmespeichernden und/oder strömungstechnischen Wirkung des reinigungswirksamen Bauteils (4) ermittelt wird und durch den Vergleich oder die Vergleiche ermittelt wird, ob das reinigungswirksame Bauteil (4) im Abgasleitungsabschnitt angeordnet ist oder nicht.

2. Verfahren nach Anspruch 1,
**dadurch gekennzeichnet, dass**
von der Überwachungselektronik (7) die zeitlichen Ableitungen (dT1/dt) und (dT2/dt) der einströmseitigen Abgastemperatur (T1) und der ausströmseitigen Abgastemperatur (T2), und die Differenz (dT1/dt - dT2/dt) der Ableitungen ermittelt werden.

3. Verfahren nach Anspruch 2,
**dadurch gekennzeichnet, dass**
von der Überwachungselektronik (7) ein Signal erzeugt wird, welches auf das Fehlen des reinigungswirksamen Bauteils (4) oder auf das Vorhandensein eines falschen Bauteils hinweist, wenn die Differenz (dT1/dt - dT2/dt) der Ableitungen innerhalb eines vorgegebenen Wertebereichs liegt.

4. Verfahren nach Anspruch 2,
**dadurch gekennzeichnet, dass**
von der Überwachungselektronik (7) ein Signal erzeugt wird, welches auf das Fehlen des reinigungswirksamen Bauteils(4) oder auf das Vorhandensein eines falschen Bauteils hinweist, wenn die Differenz (dT1/dt - dT2/dt) der Ableitungen innerhalb eines vorgegebenen Wertebereichs liegt und die zeitliche Ableitung (dT1/dt) der einströmseitigen Abgastemperatur (T1) außerhalb eines vorgegebenen Wertebereichs liegt.

5. Verfahren nach Anspruch 1,
**dadurch gekennzeichnet, dass**
von der Überwachungselektronik (7) die zeitlichen Ableitungen (dT2/dt) und (dT2*/dt) der ausströmseitigen Abgastemperatur (T2) und der errechneten Temperatur (T2*), und die Differenz (dT2*/dt - dT2/dt) der Ableitungen ermittelt werden.

6. Verfahren nach Anspruch 5,
**dadurch gekennzeichnet, dass**
von der Überwachungselektronik (7) ein Signal erzeugt wird, welches auf das Fehlen des reinigungswirksamen Bauteils (4) oder auf das Vorhandensein eines falschen Bauteils hinweist, wenn die Differenz (dT2*/dt - dT2/dt) der Ableitungen außerhalb eines vorgegebenen Wertebereichs liegt.

7. Verfahren nach Anspruch 5,
**dadurch gekennzeichnet, dass**
von der Überwachungselektronik (7) die zeitliche Ableitung (dT1/dt) der einströmseitigen Abgastemperatur (T1) ermittelt wird und ein Signal erzeugt wird, welches auf das Fehlen des reinigungswirksamen Bauteils (4) oder auf das Vorhandensein eines falschen Bauteils hinweist, wenn die Differenz (dT2*/dt - dT2/dt) der Ableitungen außerhalb eines vorgegebenen Wertebereichs liegt und die zeitliche Ableitung (dT1/dt) der einströmseitigen Abgastemperatur (T1) außerhalb eines vorgegebenen Wertebereichs liegt.

## Claims

1. Method for monitoring an exhaust gas system of a motor vehicle with an internal combustion engine (1) and with an electronic monitoring unit (7), such that a temperature sensor (6) for measuring an exhaust gas outflow temperature (T2) is arranged on the outflow side (14) of an exhaust pipe section (15) provided for the accommodation of a component (4) with a purifying action, such that the electronic monitoring unit (7) compares a time variation of the outflow exhaust gas temperature (T2) with a time variation of an inflow exhaust gas temperature (T1) on the inlet side (13) of the said exhaust pipe section (15), such that in addition or alternatively the time variation of the outflow exhaust gas temperature (T2) is compared with a time variation of a calculated value (T2*) of the exhaust gas temperature on the outflow side (14) of the said exhaust pipe section (15), such that the calculated value (T2*) is determined with reference to the heat-storing and/or flow-technological action of the component(4) with a purifying action and, from the said comparison or comparisons, it is determined whether the component 4 with the purifying action is or is not present in the exhaust pipe section 15.

2. Method according to Claim 1,
**characterised in that** the electronic monitoring unit (7) determines the time derivatives (dT1/dt) and (dT2/dt) of the exhaust gas temperature (T1) on the inflow side and of the exhaust gas temperature (T2) on the outflow side, and the difference (dT1/dt - dT2/dt) between the said derivatives.

3. Method according to Claim 2,
**characterised in that** the electronic monitoring unit (7) produces a signal that indicates the absence of the component 4 with the purifying action or the presence of a wrong component, when the difference (dT1/dt - dT2/dt) between the said derivatives is within a specified range of values.

4. Method according to Claim 2,
**characterised in that** the electronic monitoring unit (7) produces a signal that indicates the absence of the component 4 with the purifying action or the presence of a wrong component, when the difference (dT1/dt - dT2/dt) between the said derivatives is within a specified range of values and the time derivative (dT1/dt) of the exhaust gas temperature on the inflow side is outside a specified range of values.

5. Method according to Claim 1,
**characterised in that** the electronic monitoring unit (7) determines the time derivatives (dT2/dt) and (dT2*/dt) of the exhaust gas temperature (T2) on the outflow side and of the calculated temperature (T2*), and the difference (dT2*/dt - dT2/dt) between the said derivatives.

6. Method according to Claim 5,
**characterised in that** the electronic monitoring unit (7) produces a signal that indicates the absence of the component 4 with the purifying action or the presence of a wrong component, when the difference (dT2*/dt - dT2/dt) between the said derivatives is outside a specified range of values.

7. Method according to Claim 5,
**characterised in that** the electronic monitoring unit (7) determines the time derivative (dT1/dt) of the exhaust gas temperature (T1) on the inflow side and produces a signal which indicates the absence of the component 4 with the purifying action or the presence of a wrong component when the difference (dT2*/dt - dT2/dt) between the said derivatives is outside a specified range of values and the time derivative (dT1/dt) of the exhaust gas temperature (T1) on the inflow side is outside a specified range of values.

## Revendications

1. Procédé de surveillance d'un système de gaz d'échappement d'un véhicule automobile avec un moteur à combustion interne (1) et avec un système électronique de surveillance (7), un capteur de température (6) pour la mesure d'une température des gaz d'échappement (T2) étant disposé du côté d'un segment de conduit de gaz d'échappement (15) prévu pour le logement d'un élément d'épuration (4), une variation dans le temps de la température des gaz d'échappement (T2) du côté de l'évacuation (14) étant comparée par le système électronique de surveillance (7) à une variation dans le temps de la température des gaz d'échappement (T1) du côté de l'admission du côté de l'admission (13) du segment de conduit de gaz d'échappement (15),
en plus ou en variante, la variation dans le temps de la température des gaz d'échappement (T2) du côté de l'évacuation étant comparée à une variation dans le temps d'une valeur calculée (T2^{*}) pour la température des gaz d'échappement du côté de l'évacuation (14) du segment de conduit de gaz d'échappement (15), la valeur calculée (T2^{*}) étant déterminée à l'aide de l'effet d'accumulation thermique et/ou relatif à la technique des fluides de l'élément d'épuration (4) et la comparaison ou les comparaisons permettant de déterminer si l'élément d'épuration (4) est disposé dans le segment de conduit de gaz d'échappement ou non.

2. Procédé selon la revendication 1,
**caractérisé en ce que**
les dérivations dans le temps (dT1/dt) et (dT2/dt) de la température des gaz d'échappement du côté de l'admission (T1) et de la température des gaz d'échappement du côté de l'évacuation (T2) et la différence (dT1/dt - dT2/dt) des dérivations étant déterminées par le système électronique de surveillance (7).

3. Procédé selon la revendication 2,
**caractérisé en ce que**
le système électronique de surveillance (7) génère un signal qui indique l'absence de l'élément d'épuration (4) ou la présence d'un élément erroné lorsque la différence (dT1/dt - dT2/dt) des dérivations se trouve dans les limites d'une plage de valeurs prédéterminée.

4. Procédé selon la revendication 2,
**caractérisé en ce que**
le système électronique de surveillance (7) génère un signal qui indique l'absence de l'élément d'épuration (4) ou la présence d'un élément erroné lorsque la différence (dT1/dt - dT2/dt) des dérivations se trouve dans les limites d'une plage de valeurs prédéterminée et lorsque la dérivation dans le temps (dT1/dt) de la température des gaz d'échappement du côté de l'admission (T1) se trouve à l'extérieur d'une plage de valeurs prédéterminée.

5. Procédé selon la revendication 1,
**caractérisé en ce que**
les dérivations dans le temps (dT2/dt) et (dT2*/dt) de la température des gaz d'échappement du côté de l'évacuation (T2) et de la température calculée (T2*) et la différence (dT2*/dt - dT2/dt) des dérivations sont déterminées par le système électronique de surveillance (7).

6. Procédé selon la revendication 5,
**caractérisé en ce que**
le système électronique de surveillance (7) génère un signal qui indique l'absence de l'élément d'épuration (4) ou la présence d'un élément erroné lorsque la différence (dT2*/dt - dT2/dt) des dérivations se trouve à l'extérieur d'une plage de valeurs prédéterminée.

7. Procédé selon la revendication 5,
**caractérisé en ce que**
le système électronique de surveillance (7) détermine la dérivation dans le temps (dT1/dt) de la température des gaz d'échappement du côté de l'admission (T1) et génère un signal qui indique l'absence de l'élément d'épuration (4) ou la présence d'un élément erroné lorsque la différence (dT2*/dt - dT2/dt) des dérivations se trouve à l'extérieur d'une plage de valeurs prédéterminée et lorsque la dérivation dans le temps (dT1/dt) de la température des gaz d'échappement du côté de l'admission (T1) se trouve à l'extérieur d'une plage de valeurs prédéterminée.
